# EUROPÄISCHE PATENTSCHRIFT

(11) **EP 1 792 170 B1**
(45) Veröffentlichungstag und Bekanntmachung des Hinweises auf die Patenterteilung: **13.06.2018**
(21) Anmeldenummer: 05772014.6
(22) Anmeldetag: 18.07.2005
(51) Int. Cl.: G01N 15/06, G01N 27/04, F01N 11/00, G01N 1/22

(54) **SENSORELEMENT FÜR PARTIKELSENSOREN UND VERFAHREN ZUM BETRIEB DESSELBEN**
SENSOR ELEMENT FOR PARTICLE SENSORS AND METHOD FOR OPERATING THE SENSOR ELEMENT
ELEMENT DE DETECTION POUR CAPTEURS DE PARTICULES ET PROCEDE D'EXPLOITATION CORRESPONDANT

(30) Priorität: 07.09.2004 DE 102004043121
(43) Veröffentlichungstag der Anmeldung: 06.06.2007
(73) Patentinhaber: ROBERT BOSCH GMBH, 70442 Stuttgart (DE)
(72) Erfinder: SCHMIDT, Ralf, 70839 Gerlingen (DE); SIEBERT, Markus, 71229 Leonberg (DE); RÖSCH, Sabine, 71254 Ditzingen (DE); MARX, Helmut, 70771 Echterdingen (DE); SCHITTENHELM, Henrik, 70182 Stuttgart (DE)
(86) Internationale Anmeldenummer: PCT/EP2005/053435
(87) Internationale Veröffentlichungsnummer: WO 2006/027288

(56) Entgegenhaltungen:
- DE-A1- 10 156 946
- DE-A1- 10 219 798
- DE-B3- 10 331 838
- US-A- 5 247 827
- US-A1- 2003 196 499

## Beschreibung

Die Erfindung geht von einem Sensorelement und einem Verfahren zur Bestimmung der Konzentration von Partikeln in Gasgemischen sowie deren Verwendung gemäß der im Oberbegriff der unabhängigen Ansprüche definierten Art aus.

### Stand der Technik

Im Zuge einer sich verschärfenden Umweltgesetzgebung erlangen zunehmend Abgasnachbehandlungssysteme Bedeutung, die die Filtration bzw. Eliminierung von in Verbrennungsabgasen existierenden Rußpartikeln ermöglichen. Um die Funktionstüchtigkeit derartiger Abgasnachbehandlungssysteme zu überprüfen bzw. zu überwachen, werden Sensoren benötigt, mit denen auch im Langzeitbetrieb eine genaue Ermittlung der aktuell im Verbrennungsabgas vorliegenden Partikelkonzentration ermittelt werden kann. Darüber hinaus soll mittels derartiger Sensoren eine Beladungsprognose von beispielsweise in einem Abgassystem vorgesehenen Dieselpartikelfiltern ermöglicht werden, um eine hohe Systemsicherheit zu erreichen und dadurch kostengünstigere Filtermaterialien einsetzen zu können.

Aus der DE 102 19 798 A1 ist ein Sensor zur Detektion von Stoffen in einem Fluidstrom bekannt, der auf der Basis eines keramischen Mehrlagensubstrats ausgeführt ist. Er umfasst zwei voneinander beabstandete Messelektroden, die dem zu untersuchenden Verbrennungsabgas ausgesetzt sind. Lagert sich zwischen den beiden Messelektroden Ruß ab, so kommt es beim Anlegen einer Spannung an die Messelektroden zu einem Stromfluss zwischen den Messelektroden. Zwei schichtförmig ausgeführte Heizelemente ermöglichen es, die Elektroden bzw. deren Umgebung auf thermischem Wege von abgelagerten Rußpartikeln zu befreien. Der Sensor umfasst weiterhin einen Filter, der einem die Messelektroden enthaltenden Messgasraum in Strömungsrichtung des Messgases vorgeschaltet ist. Der vorgeschaltete Filter bewirkt eine Ablagerung von groben Rußpartikeln bei der Diffusion des Messgases in das Innere des Sensors. Nachteilig an dieser Art von Sensoren ist einerseits deren aufwendige Herstellung und zum anderen die Abhängigkeit der erhaltenen Messresultate von der Korngrößenverteilung des im Messgas enthaltenen Rußes, da sowohl die Beladung des Filters mit groben Partikeln als auch die Beladung der Messelektroden mit entsprechend feinen Partikeln in das Messergebnis eingehen, ohne dass beide Einflüsse getrennt erfasst werden können.

Ein weiterer Sensor ist aus der US 2003/196499 A1 bekannt.

Aufgabe der vorliegenden Erfindung ist es, ein Sensorelement für Sensoren und ein Verfahren zur Bestimmung der Konzentration von Partikeln in Gasgemischen bereitzustellen, das eine hohe Genauigkeit der erhaltenen Messsignale ergibt und dennoch kostengünstig ist.

### Vorteile der Erfindung

Das Sensorelement bzw. das Verfahren mit den kennzeichnenden Merkmalen der unabhängigen Ansprüche hat den Vorteil, dass die der Erfindung zugrundeliegende Aufgabe in vorteilhafter Weise gelöst wird. Dies beruht insbesondere auf dem einfachen Aufbau des Sensorelements und auf der Verwendung einer mit einer Messelektrode des Sensorelementes in physischem Kontakt stehenden, porösen und für die zu bestimmenden Partikel diffusionsoffenen Schicht, die sowohl als Partikelfänger als auch als Element zur Beruhigung des zur Oberfläche der Messelektrode gelangenden Gasgemischs wirkt. Insbesondere ist das der Erfindung zugrundeliegende Sensorelement deutlich unempfindlicher gegenüber Anlagerung größerer Ruß- oder sonstiger die elektrische Leitfähigkeit des Sensorelements beeinflussender Partikel geschützt, die bei offen zugänglichen Messelektroden ggf. zu einem Kurzschluss und zu Signalsprüngen des Sensorelements führen würden. Ein weiterer Vorteil ist darin zu sehen, dass Partikel, die in die Poren der porösen Schicht bereits eindiffundiert sind, durch Turbulenzen innerhalb des zu bestimmenden Gasgemischs nicht wieder weggerissen werden können. Dies verbessert die Stabilität der Messsignale des Sensorelements.

Weitere vorteilhafte Ausführungsformen des vorliegenden Sensorelements bzw. Verfahrens zum Betrieb desselben ergeben sich aus den Unteransprüchen.

So ist es von Vorteil, wenn die Messelektroden vorzugsweise als ineinander verzahnte Interdigitalelektroden ausgeführt sind, da auf diese Weise der elektrische Widerstand bzw. die elektrische Leitfähigkeit großer Oberflächenbereiche unter definierten Bedingungen bestimmt werden können und somit die Empfindlichkeit und die Güte der Messsignale deutlich verbessert werden können.

Erfindungsgemäß ist vorgesehen, dass die Messelektroden in verschiedenen Schichtebenen des Sensorelements angeordnet sind. Dies ermöglicht, zusätzlich zumindest eine der Messelektroden als flächige Elektrode auszuführen, sodass eine Großfläche des Sensorelements zumindest weitgehend bedeckt ist. Die Anordnung der Messelektroden übereinander in verschiedenen Schichtebenen verkürzt die Leitfähigkeitsstrecke zwischen den Messelektroden, die durch Rußpartikel überbrückt werden muss. So ist beispielsweise bei keramischen Sensorelementen in lateraler Richtung üblicherweise nur eine Auflösung der Strukturen von ca. 100 µm realisierbar, während hingegen in vertikaler Richtung die Schichtdicke der Strukturen bei 10 - 15 µm liegen kann. Durch Verkürzung der von Partikeln zu überbrückenden Distanz zwischen den Messelektroden verkürzt sich in gleichem Maße der Zeitraum bis zur Überschreitung einer Auslöseschwelle des Sensorelements, sodass das Sensorelement bei übereinander angeordneten Messelektroden eine deutlich bessere Messempfindlichkeit zeigt.

In einer weiteren vorteilhaften Ausführungsform der vorliegenden Erfindung ist die poröse Schicht aus dem gleichen oder zumindest einem ähnlichen Material ausgeführt wie das Substrat, auf dem zumindest eine der Messelektroden des Sensorelements aufgebracht sind. Dabei handelt es sich vorzugsweise um einen elektrisch isolierenden Werkstoff wie Aluminiumoxid, dem beispielsweise Erdalkalioxide zugemischt sind.

In einer besonders vorteilhaften Ausführungsform der vorliegenden Erfindung ist eine Auswertevorrichtung vorgesehen, die eine Veränderung des zwischen den Messelektroden anliegenden Stromflusses pro Zeiteinheit ermittelt und dies als Maß für die Partikelkonzentration ausgibt.

Das Sensorelement bzw. das Verfahren zum Betrieb desselben ist in vorteilhafter Weise geeignet zur Überwachung der Betriebsweise eines Dieselmotors bzw. zur Überprüfung der Funktionstüchtigkeit oder des Beladungszustands eines Partikelfilters.

### Zeichnung

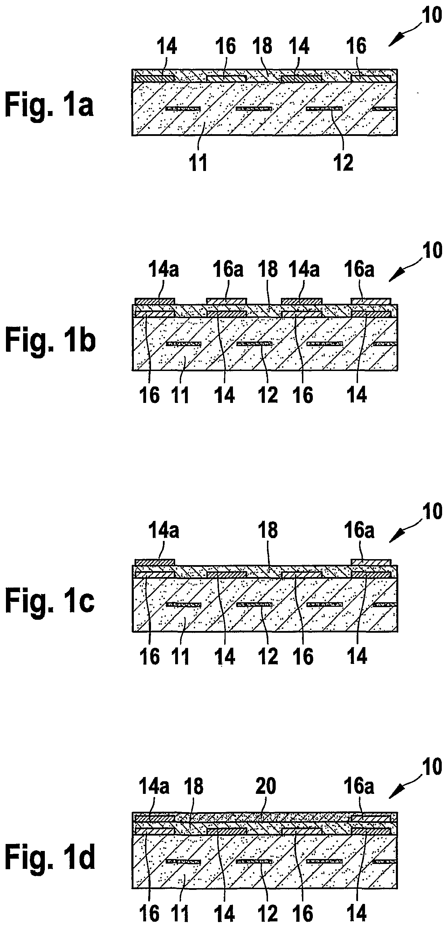

Ein Ausführungsbeispiel des erfindungsgemäßen Sensorelements ist in der Zeichnung schematisch vereinfacht dargestellt und wird in der nachfolgenden Beschreibung näher erläutert. Dabei zeigen die Figuren 1b bis 1d Längsschnitte durch Sensorelemente gemäß drei Varianten des Ausführungsbeispiels.

Die Figuren 1a und 2 sowie 3a und 3b zeigen hingegen keine Ausführungsbeispiele der vorliegenden Erfindung.

### Beschreibung der Ausführungsbeispiele

In den Figuren 1a - 1d ist ein prinzipieller Aufbau eines Sensorelements dargestellt. Mit 10 ist ein keramisches Sensorelement bezeichnet, das der Bestimmung einer Partikelkonzentration in einem das Sensorelement umgebenden Gasgemisch dient. Das Sensorelement 10 umfasst ein keramisches Substrat 11, wobei als keramisches Material ein elektrisch isolierendes Material wie beispielsweise bariumhaltiges Aluminiumoxid verwendet wird, da dieses auch bei Temperaturwechselbeanspruchungen über einen langen Zeitraum einen weitgehend konstant hohen elektrischen Widerstand aufweist. Alternativ ist auch die Verwendung von Cerdioxid bzw. der Zusatz anderer Erdalkalioxide möglich.

Das Sensorelement 10 weist weiterhin ein keramisches Heizelement 12 auf, das in Form einer elektrischen Widerstandsleiterbahn ausgeführt ist und der Aufheizung des Sensorelementes 10 insbesondere auf die Temperatur des zu bestimmenden Gasgemischs bzw. dem Abbrand der auf der Oberfläche des Sensorelements 10 abgelagerten Rußpartikel dient. Die Widerstandsleiterbahn ist vorzugsweise aus einem Cermet-Material ausgeführt; vorzugsweise als Mischung von Platin oder einem Platinmetall mit keramischen Anteilen, wie beispielsweise Aluminiumoxid. Die Widerstandsleiterbahn ist vorzugsweise in Form eines Mäanders ausgeführt und weist an beiden Enden nicht dargestellte elektrische Anschlüsse auf. Durch Anlegen einer entsprechenden Heizspannung an die Anschlüsse der Widerstandsleiterbahn kann die Heizleistung des Heizelementes 12 entsprechend reguliert werden.

Auf einer Großfläche des Sensorelements 10 sind beispielsweise zwei Messelektroden 14, 16 aufgebracht, die gemäß Figur la als ineinander verzahnte Interdigitalelektroden ausgebildet sind. Die Verwendung von Interdigitalelektroden als Messelektroden 14, 16 ermöglicht vorteilhafterweise eine besonders genaue Bestimmung des elektrischen Widerstandes bzw. der elektrischen Leitfähigkeit des sich zwischen den Messelektroden 14, 16 befindenden Oberflächenmaterials. Zur Kontaktierung der Messelektrode 14, 16 sind im Bereich eines dem Gasgemisch abgewandten Ende des Sensorelements nicht dargestellte Kontaktflächen vorgesehen.

Auf der mit den Messelektroden 14, 16 versehenen Großfläche des Sensorelements 10 ist weiterhin eine poröse Schicht 18 vorgesehen, die das Substrat 11 zumindest weitgehend bedeckt und zusätzlich die Messelektroden 14, 16 gegenüber einem direkten Kontakt des zu bestimmenden Gasgemischs abgeschirmt. Dabei ist die Schichtdicke der porösen Schicht 18 vorzugsweise größer als die Schichtdicke der Messelektroden 14, 16. Die poröse Schicht 18 ist vorzugsweise offenporös ausgeführt, wobei die Porengröße so gewählt wird, dass die zu bestimmenden Partikel im Gasgemisch in die Poren der porösen Schicht 18 eindiffundieren können. Die Porengröße der porösen Schicht 18 liegt dabei vorzugsweise in einem Bereich von 2 bis 10 µm. Die poröse Schicht 18 ist aus einem keramischen Material ausgeführt, das vorzugsweise dem Material des Substrats 11 ähnlich ist oder diesem entspricht und kann einfach mittels Siebdruck hergestellt werden. Die Porosität der porösen Schicht 18 kann durch Zusatz von Porenbildnern zu der Siebdruckpaste entsprechend eingestellt werden.

Während des Betriebs des Sensorelementes 10 wird an die Messelektroden 14, 16 eine Spannung angelegt. Da die Messelektroden 14, 16 auf der Oberfläche des elektrisch isolierenden Substrats 11 angeordnet sind, kommt es zunächst im wesentlichen zu keinem Stromfluss zwischen den Messelektroden 14, 16.

Enthält ein das Sensorelement 10 umströmendes Gasgemisch Partikel, insbesondere Ruß, so lagern sich diese auf der Oberfläche des Sensorelementes 10 ab. Durch die offenporige Struktur der porösen Schicht 18 diffundieren die Partikel durch die poröse Schicht 18 hindurch bis in unmittelbare Nähe der Messelektroden 14, 16. Da Ruß eine bestimmte elektrische Leitfähigkeit aufweist, kommt es bei ausreichender Beladung der Oberfläche des Sensorelementes 10 bzw. der porösen Schicht 18 mit Ruß zu einem ansteigenden Stromfluss zwischen den Messelektroden 14, 16, der mit dem Ausmaß der Beladung korreliert.

Wird nun an die Messelektroden 14, 16 eine vorzugsweise konstante Gleich- oder Wechselspannung angelegt und der Anstieg des Stromflusses über der Zeit ermittelt, so kann aus dem Quotienten aus Stromflussanstieg und Zeit auf den aktuellen Partikelmassenstrom, insbesondere Rußmassenstrom, im Gasgemisch geschlossen werden. Mit dieser Messmethode wird die Konzentration all derjenigen Partikel in einem Gasgemisch erfasst, die die elektrische Leitfähigkeit des sich zwischen den Messelektroden 14, 16 befindenden keramischen Materials positiv oder negativ beeinflussen.

In Figur 1b ist die erfindungsgemäße Variante des in Figur 1a dargestellten nicht erfindungsgemäßen Sensorelements abgebildet. Dabei bezeichnen gleiche Bezugszeichen die gleichen Bauteilkomponenten wie in Figur 1a.

Die Messelektroden des in Figur 1b dargestellten Sensorelementes 10 sind erfindungsgemäß in zwei unterschiedlichen Schichtebenen des Sensorelements 10 angeordnet. Dabei sind erfindungsgemäß erste Messelektroden 14, 16 direkt auf eine Großfläche des Substrats 11 aufgebracht und werden von der porösen Schicht 18 umgeben. Auf der durch die poröse Schicht 18 gebildeten weiteren Großfläche sind erfindungsgemäß weitere Messelektroden 14a, 16 a vorgesehen. Die weiteren Messelektroden 14a, 16a sind dabei nicht von der porösen Schicht 18 bedeckt. Die Messelektroden 14, 14a, 16, 16a sind beispielsweise als Interdigitalelektroden ausgeführt, wobei die Messelektroden 14, 16 bzw. 14a, 16a jeweils vorzugsweise deckungsgleich übereinander angeordnet sind. Der Vorteil dieser zweiten Variante des ersten Ausführungsbeispiels besteht darin, dass kurze Abstände zwischen den Messelektroden 14, 16a bzw. 14a, 16 auf einfache Weise realisiert werden können, wodurch das Ansprechverhalten des Sensorelementes 10 bereits bei kleinen Partikelkonzentrationen verbessert wird.

Darüber hinaus kann mittels der weiteren Messelektroden 14a, 16a die elektrische Oberflächenleitfähigkeit der porösen Schicht 18 einfach bestimmt werden, woraus sich insbesondere die Konzentration der im Gasgemisch vorhandenen Partikel mit einem gewissen Mindestdurchmesser bestimmen lässt. Wird auf diesen Zusatzvorteil keinen Wert gelegt, können die weiteren Messelektroden 14a, 16a auch mit einer weiteren, hier nicht dargestellten, porösen und für die zu messenden Partikel diffusionsoffenen Schutzschicht überzogen werden.

In Figur lc ist eine weitere Variante des erfindungsgemäßen Sensorelements gemäß dem Ausführungsbeispiel dargestellt. Dabei bezeichnen weiterhin gleiche Bezugszeichen gleiche Bauteilkomponenten wie in den Figuren 1a und 1b.

Bei der in Figur 1c dargestellten dritten Variante sind die weiteren Messelektroden 14a, 16a nicht als Interdigitalelektroden ausgeführt sondern in Form einfacher, auf der porösen Schicht 18 positionierter Leiterbahnen. Dies vereinfacht den Aufbau des Sensorelements 10 wesentlich. Die weiteren Messelektroden 14a, 16a können gemäß der in Figur 1d dargestellten dritten Variante mit einer weiteren porösen Schicht 20 überzogen sein, die ebenfalls diffusionsoffen für die zu bestimmenden Partikel ausgeführt ist und vorzugsweise, jedoch nicht zwingend, aus dem selben Material wie die poröse Schicht 18 besteht.

Der besondere Vorteil der in Figur 1c und 1d dargestellten Varianten ist darin zu sehen, dass selbst dann, wenn bereits eine Sättigung an sich anlagerndem Ruß innerhalb der porösen Schicht 18 eingetreten ist, lateral zwischen den Elektroden 14a, 16a sich anschließend auf der Oberfläche der porösen Schicht 18 ablagernder Ruß bestimmt werden kann.

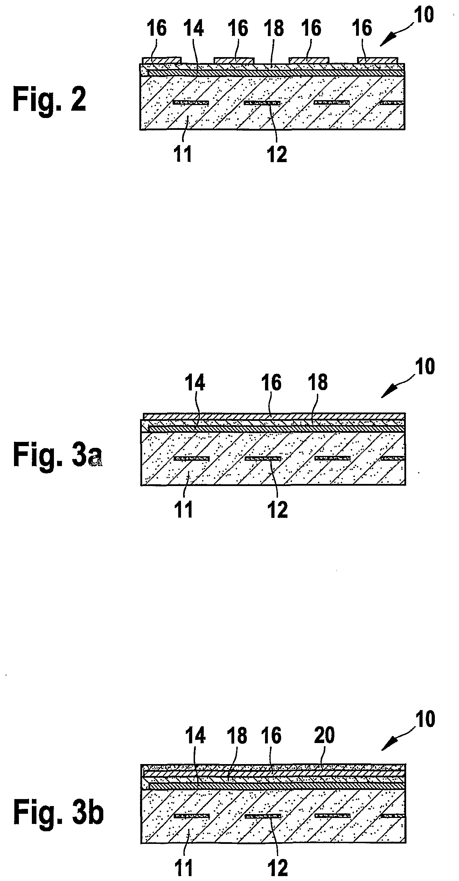

In Figur 2 ist ein nicht erfindungsgemäßes Sensorelement dargestellt. Dabei bezeichnen weiterhin gleiche Bezugszeichen gleiche Bauteilkomponenten wie in den Figuren 1a bis 1d. Bei dem in Figur 2 dargestellten zweiten Ausführungsbeispiel ist die Messelektrode 14 in flächiger Form ausgeführt, wobei die Großfläche des Sensorelements 10 vorzugsweise zumindest weitgehend bedeckt wird. Die Messelektroden 16 ist in einer weiteren Schichtebenen des Sensorelements auf der durch die poröse Schicht 18 gebildeten weiteren Großfläche des Sensorelements 10 in Form einer Interdigitalelektrode ausgeführt.

In Figur 3a ist ein nicht erfindungsgemäßes Sensorelement dargestellt. Dabei bezeichnen weiterhin gleiche Bezugszeichen gleiche Bauteilkomponenten wie in den bereits beschriebenen Figuren. Das in Figur 3a dargestellte Sensorelement 10 weist zwei flächige, poröse Elektroden 14, 16 auf, die in unterschiedlichen Schichtebenen des Sensorelements ausgebildet sind und vorzugsweise deckungsgleich übereinander angeordnet sind. Es ist jedoch auch möglich, die Messelektroden 14, 16 in ihrer geometrischen Ausführung verschieden zu gestalten und/oder nicht deckungsgleich anzuordnen. Der Vorteil dieser Ausführungsform besteht darin, dass der Einfluss der Oberflächenleitfähigkeit der porösen Schicht 18 auf das Messsignal des Sensorelements 10 ausgeschlossen werden kann. Eine Variante des Sensorelements 10 gemäß drittem Ausführungsbeispiel ist in Figur 3b dargestellt. Dabei ist die Messelektrode 14 durch die poröse Schicht 18 bedeckt und die Messelektrode 16 durch die weitere poröse Schicht 20. Die weitere poröse Schicht 20 schützt die Messelektroden 16 vor abrassiven Einflüssen des zu bestimmenden Gasgemischs.

Es können zahlreiche Abwandlungen dieses Sensorelements vorgenommen werden. So ist es beispielsweise möglich, das Substrat 11 als keramischen Mehrschichtaufbau auszuführen, sowie weitere Messelektroden vorzusehen.

Die Anwendung des beschriebenen Sensorelements ist nicht auf die Bestimmung von Rußpartikeln in Abgasen von Verbrennungsmotoren beschränkt, sondern es kann allgemein zur Bestimmung der Konzentration von Partikeln, die die elektrische Leitfähigkeit eines keramischen Substrats bei Einlagerung verändern, beispielsweise in chemischen Herstellungsprozessen oder Abluftnachbehandlungsanlagen, eingesetzt werden.

## Patentansprüche

1. Sensorelement für Gassensoren zur Bestimmung der Konzentration von Partikeln in Gasgemischen, insbesondere Rußsensoren, mit mindestens einer, auf einem elektrisch isolierenden Substrat (11) aufgebrachten, ersten Messelektrode (14, 16) und mit mindestens einer zweiten Messelektrode (14a, 16a), wobei an die erste und an die zweite Messelektrode eine Spannung anlegbar ist, wobei zumindest die erste Messelektrode von einem porösen, für die zu bestimmenden Partikel diffusionsoffenen Material (18, 20) zumindest teilweise bedeckt ist, wobei, die erste und die zweite Messelektrode (14, 14a, 16, 16a) in verschiedenen Schichtebenen des Sensorelements angeordnet sind, **dadurch gekennzeichnet, dass** die erste Messelektrode und eine weitere erste Messelektrode (14, 16) direkt auf eine Großfläche des Substrats (11) aufgebracht sind und von dem für die zu bestimmenden Partikel diffusionsoffenen Material (18, 20) umgeben sind, dass auf der durch das für die zu bestimmenden Partikel diffusionsoffene Material (18, 20) gebildeten weiteren Großfläche die zweite Messelektrode und eine weitere zweite Messelektrode (14a, 16a) vorgesehen sind.

2. Sensorelement nach Anspruch 1, **dadurch gekennzeichnet, dass** die erste und/oder zweite Messelektrode (14, 14a, 16, 16a) als Interdigitalelektrode ausgeführt ist.

3. Sensorelement nach Anspruch 1, **dadurch gekennzeichnet, dass** die erste und/oder zweite Messelektrode (14, 14a, 16, 16a) als flächige Elektrode ausgeführt ist und eine Großfläche des Sensorelements bedeckt.

4. Sensorelement nach einem der Ansprüche 1 bis 3, **dadurch gekennzeichnet, dass** das elektrisch isolierende Substrat (11) Aluminiumoxid und/oder Erdalkalioxide enthält.

5. Sensorelement nach einem der vorhergehenden Ansprüche, **dadurch gekennzeichnet, dass** eine Auswertevorrichtung vorgesehen ist, die eine Veränderung des zwischen den Messelektroden (14, 14a, 16, 16a) anliegenden Stromflusses pro Zeiteinheit ermittelt und dies als Maß für die Partikelkonzentration ausgibt.

6. Sensorelement nach einem der vorhergehenden Ansprüche, **dadurch gekennzeichnet, dass** das poröse Material (18, 20) aus dem Material des elektrisch isolierenden Substrats (11) gebildet ist oder dieses umfasst.

7. Sensorelement nach einem der vorhergehenden Ansprüche, **dadurch gekennzeichnet, dass** ein Heizelement (12) zur Erhitzung des Sensorelements auf eine Temperatur über der Abbrandtemperatur der zu bestimmenden Partikel vorgesehen ist.

8. Verfahren zur Bestimmung der Konzentration von Partikeln in Gasgemischen, insbesondere von Ruß in Abgasen von Verbrennungsmotoren, mittels eines Sensorelements nach einem der vorhergehenden Ansprüchen, wobei an mindestens zwei Messelektroden (14, 14a, 16, 16a) eine Spannung angelegt wird und der sich zwischen den Messelektroden (14, 14a, 16, 16a) einstellende Stromfluss bestimmt wird, und wobei die Veränderung des zwischen den Messelektroden (14, 14a, 16, 16a) auftretenden Stromflusses pro Zeiteinheit ermittelt und als Maß für die Partikelkonzentration ausgegeben wird.

9. Verfahren nach Anspruch 8, **dadurch gekennzeichnet, dass** eine Regenerierung des Sensorelements eingeleitet wird, sobald der sich zwischen den Messelektroden (14, 14a, 16, 16a) einstellende Stromfluss einen vorbestimmten Wert überschreitet und/oder für einen vorbestimmten Zeitraum einen konstanten Wert annimmt.

10. Verwendung eines Sensorelements nach einem der Ansprüche 1 bis 7 oder eines Verfahrens nach einem der Ansprüche 8 oder 9 zur Überwachung der Betriebsweise eines Dieselmotors oder der Funktionstüchtigkeit und/oder des Beladungszustands eines Partikelfilters.

## Claims

1. Sensor element for gas sensors for determining the concentration of particles in gas mixtures, in particular soot sensors, comprising at least one first measurement electrode (14, 16) which is mounted on an electrically insulating substrate (11), and comprising at least one second measurement electrode (14a, 16a), wherein a voltage can be applied to the first and to the second measurement electrode, wherein at least the first measurement electrode is at least partially covered by a porous material (18, 20) which is open to diffusion of the particles to be determined, wherein the first and the second measurement electrode (14, 14a, 16, 16a) are arranged in different layer levels of the sensor element, **characterized in that** the first measurement electrode and a further first measurement electrode (14, 16) are mounted directly on a large surface of the substrate (11) and are surrounded by the material (18, 20) which is open to diffusion of the particles to be determined, **in that** the second measurement electrode and a further second measurement electrode (14a, 16a) are provided on the further large surface which is formed by the material (18, 20) which is open to diffusion of the particles to be determined.

2. Sensor element according to Claim 1, **characterized in that** the first and/or the second measurement electrode (14, 14a, 16, 16a) are/is designed as interdigital electrodes.

3. Sensor element according to Claim 1, **characterized in that** the first and/or the second measurement electrode (14, 14a, 16, 16a) are/is designed as flat electrodes and cover/covers a large surface of the sensor element.

4. Sensor element according to one of Claims 1 to 3, **characterized in that** the electrically insulating substrate (11) contains aluminium oxide and/or alkaline earth-metal oxides.

5. Sensor element according to one of the preceding claims, **characterized in that** an evaluation apparatus is provided, which evaluation apparatus ascertains a change in the current flow per unit time which is applied between the measurement electrodes (14, 14a, 16, 16a), and outputs this as a measure of the particle concentration.

6. Sensor element according to one of the preceding claims, **characterized in that** the porous material (18, 20) is formed from the material of the electrically insulating substrate (11) or comprises said material.

7. Sensor element according to one of the preceding claims, **characterized in that** a heating element (12) is provided for heating the sensor element to a temperature above the combustion temperature of the particles to be determined.

8. Method for determining the concentration of particles in gas mixtures, in particular of soot in exhaust gases from internal combustion engines, by means of a sensor element according to one of the preceding claims, wherein a voltage is applied to at least two measurement electrodes (14, 14a, 16, 16a) and the current flow which is established between the measurement electrodes (14, 14a, 16, 16a) is determined, and wherein the change in the current flow per unit time which occurs between the measurement electrodes (14, 14a, 16, 16a) is ascertained and is output as a measure of the particle concentration.

9. Method according to Claim 8, **characterized in that** regeneration of the sensor element is initiated as soon as the current flow which is established between the measurement electrodes (14, 14a, 16, 16a) exceeds a predetermined value and/or assumes a constant value for a predetermined period of time.

10. Use of a sensor element according to one of Claims 1 to 7 or of a method according to one of Claims 8 and 9 for monitoring the operation of a diesel engine or the functional capability and/or the loading state of a particle filter.

## Revendications

1. Élément capteur pour capteurs de gaz servant à déterminer la concentration de particules dans des mélanges gazeux, notamment des capteurs de suie, comprenant au moins une première électrode de mesure (14, 16) montée sur un substrat (11) électriquement isolant, et comprenant au moins une deuxième électrode de mesure (14a, 16a), une tension pouvant être appliquée à la première et à la deuxième électrode de mesure, au moins la première électrode de mesure étant au moins partiellement recouverte d'un matériau (18, 20) poreux ouvert à la diffusion des particules à déterminer, la première et la deuxième électrode de mesure (14, 14a, 16, 16a) étant disposées dans des plans de stratification différents de l'élément capteur, **caractérisé en ce que** la première électrode de mesure et une première électrode de mesure (14, 16) supplémentaire sont appliquées directement sur une grande surface du substrat (11) et sont entourées par le matériau (18, 20) ouvert à la diffusion des particules à déterminer, **en ce que** la deuxième électrode de mesure et une deuxième électrode de mesure (14a, 16a) supplémentaire sont prévues sur la grande surface supplémentaire formée par le matériau (18, 20) ouvert à la diffusion des particules à déterminer.

2. Élément capteur selon la revendication 1, **caractérisé en ce que** la première et/ou la deuxième électrode de mesure (14, 14a, 16, 16a) sont réalisées sous la forme d'électrodes interdigitées.

3. Élément capteur selon la revendication 1, **caractérisé en ce que** la première et/ou la deuxième électrode de mesure (14, 14a, 16, 16a) sont réalisées sous la forme d'électrodes plates et recouvrent une grande surface de l'élément capteur.

4. Élément capteur selon l'une des revendications 1 à 3, **caractérisé en ce que** le substrat (11) électriquement isolant contient de l'oxyde d'aluminium et/ou de l'oxyde de métaux alcalino-terreux.

5. Élément capteur selon l'une des revendications précédentes, **caractérisé en ce qu'**un dispositif d'interprétation est présent, lequel détermine une modification par unité de temps du flux de courant appliqué entre les électrodes de mesure (14, 14a, 16, 16a) et délivre celle-ci comme mesure de la concentration de particules.

6. Élément capteur selon l'une des revendications précédentes, **caractérisé en ce que** le matériau poreux (18, 20) est constitué du matériau du substrat (11) électriquement isolant ou comprend celui-ci.

7. Élément capteur selon l'une des revendications précédentes, **caractérisé en ce qu'**un élément chauffant (12) destiné à réchauffer l'élément capteur à une température supérieure à la température de combustion des particules à déterminer est présent.

8. Procédé pour déterminer la concentration de particules dans des mélanges gazeux, notamment de la suie dans des gaz d'échappement des moteurs à combustion interne, au moyen d'un élément capteur selon l'une des revendications précédentes, une tension étant appliquée à au moins deux électrodes de mesure (14, 14a, 16, 16a) et le flux de courant qui s'établit entre les électrodes de mesure (14, 14a, 16, 16a) étant déterminé, et la modification par unité de temps du flux de courant qui se produit entre les électrodes de mesure (14, 14a, 16, 16a) étant déterminée et délivrée en sortie comme mesure de la concentration des particules.

9. Procédé selon la revendication 8, **caractérisé en ce qu'**une régénération de l'élément capteur est initiée dès que le flux de courant qui s'établit entre les électrodes de mesure (14, 14a, 16, 16a) devient inférieur à une valeur prédéfinie et/ou adopte une valeur constante pendant une période prédéfinie.

10. Utilisation d'un élément capteur selon l'une des revendications 1 à 7 ou d'un procédé selon l'une des revendications 8 ou 9 pour la surveillance du mode de fonctionnement d'un moteur diesel ou de l'aptitude au fonctionnement et/ou de l'état de charge d'un filtre à particules.
